# EUROPÄISCHE PATENTSCHRIFT

(11) **EP 3 123 607 B1**
(45) Veröffentlichungstag und Bekanntmachung des Hinweises auf die Patenterteilung: **11.09.2019**
(21) Anmeldenummer: 14728487.1
(22) Anmeldetag: 26.05.2014
(51) Int. Cl.: H02M 7/49

(54) **MODULARES UMRICHTERSYSTEM FÜR EIN ELEKTRISCHES VERSORGUNGSNETZ**
MODULAR CONVERTER SYSTEM FOR AN ELECTRIC SUPPLY NETWORK
SYSTÈME MUTATEUR MODULAIRE POUR RÉSEAU DE DISTRIBUTION ÉLECTRIQUE

(43) Veröffentlichungstag der Anmeldung: 01.02.2017
(73) Patentinhaber: Siemens Aktiengesellschaft, 80333 München (DE)
(72) Erfinder: PFEIFER, Markus, 90455 Nürnberg (DE)
(86) Internationale Anmeldenummer: PCT/EP2014/060827
(87) Internationale Veröffentlichungsnummer: WO 2015/180751

(56) Entgegenhaltungen:
- EP-B1- 1 254 505
- KR-A- 20080 093 641
- US-A- 5 040 105

## Beschreibung

Die vorliegende Erfindung betrifft ein Umrichtersystem für ein elektrisches Versorgungsnetz gemäß Patentanspruch 1. Elektrisches Versorgungsnetz dienen zur Verteilung elektrischer Energie innerhalb des Stromnetzes. Vorliegend richtet sich das Interesse insbesondere auf Mittelspannungsnetze. Derartige Mittelspannungsnetze werden üblicherweise zur Energieübertragung auf Strecken bis zu 100 Kilometern eingesetzt. Hierbei werden elektrische Wechselspannungen von 10 kV oder höher übertragen.

Um Strom ins Mittelspannungsnetz zu speisen oder zu entnehmen, werden beispielsweise Umrichtersysteme verwendet, die beispielsweise einen Niederspannungsumrichter und einen Transformator umfassen. Üblicherweise werden hier sehr große und extrem schwere Transformatoren benötigt. In diesem Zusammenhang ergibt sich das Problem, dass der Transport von Transformatoren weltweit und auch in Europa massive Probleme mit sich bringen kann, welche dazu führen, dass manche Projekte nur verzögert oder mit großem Aufwand durchgeführt werden können. Beispielsweise müssen zum Transport der schweren Transformatoren Straßenbauarbeiten, Brückenbauarbeiten oder dergleichen durchgeführt werden, bei denen entsprechende Verstärkungen der Fahrbahn erforderlich sind, damit diese von Transportfahrzeugen befahren werden können.

Grundsätzlich besteht die Möglichkeit, ein Umrichtersystem derart zu konstruieren, dass dieses keinen Transformator benötigt und trotzdem ins Mittelspannungsnetz einspeisen kann. Hierbei sind jedoch die Kosten wegen der benötigten Auslegung der Komponenten des Umrichters auf das Mittelspannungsnetz sehr hoch. Des Weiteren sind diese Umrichter von ihrer Dynamik meist sehr eingeschränkt. In der Regel werden für Projekte je nach Anforderungen die Transformatoren und die Umrichter meist separat angefertigt und gegebenenfalls überdimensioniert.

Hierzu beschreibt die US 5 040 105 A einen Wechselrichter, mit dem eine dreiphasige Wechselspannung ausgegeben werden kann. Der Wechselrichter umfasst einen Summentransformator mit ersten, zweiten, dritten und vierten Transformatorpaaren. Zudem umfasst der Wechselrichter eine Reglerschaltung, die gekoppelt ist, um den Strom und die Spannung des Wechselstromausgangs zu erfassen, wobei die Reglerschaltung den Phasenwinkel sowohl auf der Grundlage der am Wechselstromausgang gemessenen Spannung als auch des am Wechselstromausgang gemessenen Stroms variiert.

Des Weiteren beschreibt die EP 1 254 505 B1 einen Stufenwellen-Leistungswandler, der eine Vielzahl von Transformatoren aufweist, die jeweils eine Primärwicklung und eine Sekundarwicklung haben. Zudem umfasst der Stufenwellen-Leistungswandler eine Vielzahl von Brückenschaltungen, die zwischen DC-Spannungsquellen und den Primarwicklungen angeordnet sind. Außerdem weist der Stufenwellen-Leistungswandler ein Modulations-Steuergerät auf, mit dem die Brückenschaltungen angesteuert werden können.

Es ist Aufgabe der vorliegenden Erfindung, eine Lösung aufzuzeigen, wie ein Umrichtersystem der eingangs genannten Art kostengünstiger und mit geringerem Aufwand bereitgestellt werden kann.

Diese Aufgabe wird durch ein Umrichtersystem mit den Merkmalen des Patentanspruchs 1 gelöst. Vorteilhafte Weiterbildungen der vorliegenden Erfindung sind Gegenstand der abhängigen Ansprüche, der Beschreibung und der Figuren.

Das erfindungsgemäße Umrichtersystem für ein elektrisches Versorgungsnetz umfasst eine erste und zumindest eine zweite Umrichtervorrichtung, wobei jede der Umrichtervorrichtungen eine Spannungsquelle zum Bereitstellen einer elektrischen Spannung, eine Wechselrichtereinrichtung zum Bereitstellen aus der Wechselspannung aus der von der Spannungsquelle bereitgestellten elektrischen Spannung und eine Transformatoreinrichtung zum Transformieren der an einer Primärspule anliegenden, von dem Wechselrichter bereitgestellten Wechselspannung in eine an der Sekundärspule anliegende transformierte Wechselspannung umfasst, wobei die Sekundärspulen der ersten und der zumindest einen zweiten Umrichtervorrichtung elektrisch in Reihe geschaltet sind, und wobei an einem Ausgang des Umrichtersystems eine durch die Reihenschaltung der Sekundärspulen gebildete Mittelspannung anliegt.

Erfindungsgemäß wird also ein modulares Umrichtersystem bereitgestellt, welches mindestens zwei Umrichtervorrichtungen umfasst, welche im Verbund in das elektrische Versorgungsnetz Strom einspeisen beziehungsweise entnehmen können. Das elektrische Versorgungsnetz kann ein Niederspannungsnetz oder ein Hochspannungsnetz sein. Insbesondere ist das elektrische Versorgungsnetz ein Mittelspannungsnetz. Die Umrichtervorrichtungen sind dabei bevorzugt baugleich ausgebildet. Die Umrichtervorrichtungen können auch unterschiedlich ausgebildet sein. Jede der Umrichtervorrichtungen umfasst eine Spannungsquelle, mit der eine elektrische Spannung bereitgestellt werden kann. Die Spannungsquelle ist mit einer Wechselrichtereinrichtung elektrisch verbunden, die dazu ausgelegt ist, die von der Spannungsquelle bereitgestellte elektrische Spannung in eine Wechselspannung zu wandeln. Die Wechselrichtereinrichtung ist wiederum mit einer Transformatoreinrichtung beziehungsweise einer Primärspule der Transformatoreinrichtung elektrisch verbunden. An der Primärspule der Transformatoreinrichtung liegt somit die Wechselspannung an. Diese wird mittels der Transformatoreinrichtung gewandelt, sodass an der Sekundärspule eine transformierte Wechselspannung anliegt.

Die Sekundärspulen der Umrichtervorrichtungen sind elektrisch in Reihe geschaltet. Zudem sind die Sekundärspulen mit einem Ausgang des Umrichtersystems beziehungsweise einem Anschluss elektrisch verbunden. Durch Transformatoreinrichtungen der Umrichtervorrichtungen kann eine galvanische Trennung zu der Spannungsquelle beziehungsweise zu der Wechselrichtereinrichtung bereitgestellt werden. Somit werden die an den Sekundärspulen anliegenden transformierten Wechselspannungen der einzelnen Umrichtervorrichtungen zu der Mittelspannung addiert. Durch die Anzahl der an dem Umrichtersystem verwendeten Umrichtervorrichtungen und deren jeweils bereitgestellter elektrischer Spannung kann die Mittelspannung für den jeweiligen Anwendungsfall angepasst werden. Zudem kann der Transport des Umrichtersystems durch die modulare Ausgestaltung des Umrichtersystems vereinfacht werden.

Zudem weist die Wechselrichtereinrichtung der ersten Umrichtervorrichtung eine Messeinheit zum Messen der mit der Wechselrichtereinrichtung der zumindest einen zweiten Umrichtervorrichtung bereitgestellten Wechselspannung auf. Es kann auch vorgesehen sein, dass jede der Umrichtervorrichtungen eine entsprechende Messeinheit aufweist, mit der die Wechselspannung, die von zumindest einer Wechselrichtereinrichtung einer anderen Umrichtervorrichtung bereitgestellt wird, erfasst werden kann. Die Messeinheit kann beispielsweise dazu ausgelegt sein, eine Amplitude und/oder eine Phase der Wechselspannung zu erfassen. Somit kann mit einer Umrichtervorrichtung überprüft werden, ob die andere Umrichtervorrichtung funktionstüchtig ist.

In einer Ausführungsform ist die Wechselrichtereinrichtung der ersten Umrichtervorrichtung dazu ausgelegt, eine Amplitude und/oder eine Phase der mit der Wechselrichtereinrichtung der ersten Umrichtervorrichtung bereitgestellten Wechselspannung in Abhängigkeit von der gemessenen Wechselspannung der Wechselrichtereinrichtung der zumindest einen zweiten Umrichtervorrichtung anzupassen. Beispielsweise kann mit der Messeinheit der Wechselrichtereinrichtung der ersten Umrichtervorrichtung die Wechselspannung, die mit der Wechselrichtereinrichtung der zweiten Umrichtervorrichtung bereitgestellt wird, gemessen werden. In Abhängigkeit davon kann die Amplitude und/oder die Phase der Wechselrichtereinrichtung der ersten Umrichtervorrichtung angepasst werden. Hier kann es auch vorgesehen sein, dass die Amplitude der Wechselspannung der Wechselrichtereinrichtung der ersten Umrichtervorrichtung erhöht wird, falls die Wechselrichtereinrichtung der zweiten Umrichtervorrichtung defekt ist.

Ferner ist die Wechselrichtereinrichtung der ersten Umrichtervorrichtung dazu ausgelegt, die mit der Wechselrichtereinrichtung der ersten Umrichtervorrichtung bereitgestellten Wechselspannung derart anzupassen, dass die Mittelspannung einen sinusförmigen Verlauf aufweist. Mit der Messeinheit der Wechselrichtereinrichtung der ersten Umrichtervorrichtung werden die Amplitude und/oder die Phase der mit der Wechselrichtereinrichtung der zweiten Umrichtervorrichtung bereitgestellten Wechselspannung gemessen. Weicht die Signalform der Wechselspannung von einem sinusförmigen Verlauf ab, so werden die mit der Wechselrichtereinrichtung der ersten Umrichtervorrichtung bereitgestellte Wechselspannung bezüglich der Amplituden und/oder Phase derart angepasst, dass eine Summenspannung aus den transformierten Wechselspannungen der Umrichtervorrichtungen, welche die Mittelspannung bildet, einen sinusförmigen Verlauf aufweist. Auf diese Weise kann an dem Ausgang des Umrichtersystems eine sinusförmige Wechselspannung bereitgestellt werden.

In einer weiteren Ausgestaltung weist das Umrichtersystem eine Steuereinrichtung zum Ansteuern der Wechselrichtereinrichtungen der ersten und der zumindest einen zweiten Umrichtervorrichtung auf. Mit der Steuereinrichtung können entsprechende Steuersignale an die Wechselrichtereinrichtungen ausgegeben werden. Die Wechselrichtereinrichtungen können auch dazu ausgelegt sein, die Amplitude und/oder Phase der mit ihnen bereitgestellten Wechselspannung in Abhängigkeit von dem Steuersignal anzupassen. Die Steuereinrichtung kann die Wechselrichtereinrichtungen so ansteuern, dass eine gleichmäßige Auslastung der einzelnen Umrichtervorrichtungen ermöglicht wird. Beispielsweise kann für eine erste vorbestimmte Zeitdauer eine erste Gruppe von Umrichtervorrichtungen betrieben werden und in einer nachfolgenden zweiten vorbestimmten zeitlichen Dauer eine zweite Gruppe von Umrichtervorrichtungen betrieben werden. Somit kann verhindert werden, dass einzelne oder mehrere Umrichtervorrichtungen durchgehend betrieben werden und somit beispielsweise eine Überlastung oder eine vorzeitige Alterung dieser Umrichtervorrichtungen erfolgt.

Bevorzugt weist die erste und/oder die zumindest eine zweite Umrichtervorrichtung eine Kommunikationseinrichtung auf, die zur Datenkommunikation mit dem Steuergerät verbunden ist. Die jeweilige Kommunikationseinrichtung kann beispielsweise mit der Messeinheit verbunden sein. Alternativ dazu kann die Kommunikationseinrichtung selbst dazu ausgebildet sein, eine Amplitude und/oder eine Phase der Wechselspannung der jeweiligen Wechselrichtereinrichtungen zu erfassen und an das Steuergerät zu übermitteln. Somit kann beispielsweise der aktuelle Betriebszustand der einzelnen Umrichtervorrichtungen zuverlässig überwacht werden.

In einer weiteren Ausgestaltung ist die jeweilige Spannungsquelle der ersten und der zumindest einen zweiten Umrichtervorrichtung dazu ausgelegt, eine Gleichspannung als die elektrische Spannung auszugeben. Mit anderen Worten kann die Spannungsquelle der jeweiligen Umrichtervorrichtung als Gleichspannungsquelle ausgebildet sein. Die jeweilige Spannungsquelle kann beispielsweise eine Batterie beziehungsweise einen Akkumulator umfassen. Die jeweilige Spannungsquelle kann auch Teil einer Photovoltaikanlage sein. So kann beispielsweise elektrische Energie mittels einer Photovoltaikanlage erzeugt werden und mittels des Umrichtersystems direkt in das Mittelspannungsnetz eingespeist werden.

Bevorzugt entspricht bei der jeweiligen Transformatoreinrichtung der ersten und der zumindest einen zweiten Umrichtervorrichtung eine Windungszahl der Primärspule einer Windungszahl der Sekundärspule. Die Transformatoreinrichtung weist also einen Übertragungsfaktor auf, der zum Beispiel den Wert 1 aufweist. Eine derartige Transformatoreinrichtung kann somit einfach und kostengünstig hergestellt werden.

In einer weiteren Ausführungsform ist die jeweilige Wechselrichtereinrichtung der ersten und der zumindest einen zweiten Umrichtervorrichtung dazu ausgelegt, eine erste Wechselspannung und zumindest eine zu der ersten Wechselspannung phasenverschobene zweite Wechselspannung auszugeben. Die jeweiligen Wechselrichtereinrichtungen können also mehrphasig ausgebildet sein. Beispielsweise kann eine dreiphasige Wechselspannung mit drei um 120 Grad phasenverschobenen Wechselspannungen ausgegeben werden. Auf diese Weise kann das Umrichtersystem auch für Mittelspannungsnetze verwendet werden, die als mehrphasiges Drehstromsystem ausgebildet sind.

Weiterhin hat es sich vorteilhaft gezeigt, wenn die jeweilige Transformatoreinrichtung der ersten und der zumindest einen zweiten Umrichtervorrichtung zumindest zwei Teiltransformatoren mit einer Primärseite und einer Sekundärseite umfasst, wobei an der Primärseite des ersten der zumindest zweiten Teiltransformatoren die erste Wechselspannung und an der Primärseite eines zweiten der zumindest zwei Teiltransformatoren die zweite Wechselspannung anliegt. Die Transformatoreinrichtung kann also mehrere Teiltransformatoren umfassen. Diese können als separate Komponenten ausgebildet sein. Alternativ dazu können die Teiltransformatoren der Transformatoreinrichtung beispielsweise einen gemeinsamen Kern aufweisen.

Bevorzugt sind die Sekundärseiten der ersten Teiltransformatoren und die Sekundärseiten der zweiten Teiltransformatoren der ersten und der zumindest einen zweiten Umrichtervorrichtung jeweils elektrisch in Reihe geschaltet. Die Sekundärseiten der ersten und der zweiten Teiltransformatoren können zudem jeweils mit einem entsprechenden Anschluss verbunden sein. An den Anschlüssen kann somit eine mehrphasige elektrische Spannung für das Mittelspannungsnetz bereitgestellt werden.

In einer weiteren Ausführungsform ist das Umrichtersystem dazu ausgelegt, eine an den Anschluss anliegende Mittelspannung mittels der jeweiligen Transformatoreinrichtung der ersten und der zumindest einen zweiten Umrichtervorrichtung zu transformieren und mittels der jeweiligen Wechselrichter der ersten und der zumindest einen zweiten Umrichtervorrichtung zu wandeln. Mit anderen Worten ist das Umrichtersystem dazu ausgelegt, einen elektrischen Strom aus dem Mittelspannungsnetz zu entnehmen und an die jeweiligen Spannungsquellen zu übertragen. Die jeweiligen Spannungsquellen können beispielsweise als elektrischer Energiespeicher ausgebildet sein oder einen derartigen elektrischen Energiespeicher umfassen. Dieser kann beispielsweise mit der elektrischen Spannung aus dem Mittelspannungsnetz geladen werden.

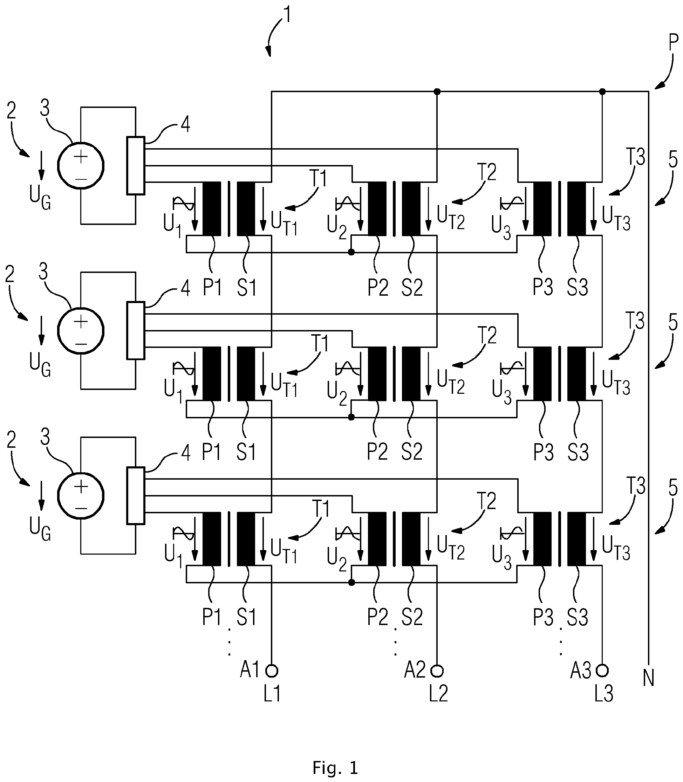

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügte Zeichnung näher erläutert. Dabei zeigt die Figur eine schematische Darstellung eines Umrichtersystems für ein Mittelspannungsnetz.

Die Figur zeigt ein modulares Umrichtersystem 1, das mit einem Mittelspannungsnetz elektrisch verbunden werden kann. Das Umrichtersystem 1 umfasst zumindest zwei Umrichtervorrichtungen. In dem vorliegenden Ausführungsbeispiel umfasst das Umrichtersystem 1 drei Umrichtervorrichtungen 2. Jede der Umrichtervorrichtungen 2 umfasst eine Spannungsquelle 3, die in dem vorliegenden Ausführungsbeispiel als Gleichspannungsquelle ausgebildet ist. Mit jeder der Spannungsquellen 3 wird eine elektrische Spannung U_{G} bereitgestellt. Anstelle der hier gezeigten Ausführungsform kann mit den jeweiligen Spannungsquellen 3 beispielsweise auch eine Wechselspannung bereitgestellt werden.

Darüber hinaus umfasst jede der Umrichtervorrichtungen 2 einen Wechselrichter 4. Der Wechselrichter 4 ist elektrisch mit der Spannungsquelle 3 verbunden. Der Wechselrichter 4 ist dazu ausgelegt, die mit der Spannungsquelle 3 bereitgestellte elektrische Spannung U_{G} in eine Wechselspannung zu wandeln. Vorliegend sind die jeweiligen Wechselrichtereinrichtungen 4 dazu ausgerichtet, drei Wechselspannungen U₁, U₂ und U₃ bereitzustellen, die jeweils um 120° phasenverschoben zueinander sind.

Darüber hinaus umfasst jede der Umrichtervorrichtungen 2 eine Transformatoreinrichtung 5. In dem vorliegenden Ausführungsbeispiel umfasst jede der Transformatoreinrichtungen 5 drei Teiltransformatoren T1, T2 und T3. Der erste Teiltransformator T1 weist eine erste Primärseite P1 und eine erste Sekundärseite S1 auf, der zweite Teiltransformator T2 weist eine zweite Primärseite T2 und eine zweite Sekundärseite S2 auf und dritte Teiltransformator T3 weist eine dritte Primärseite T3 und eine dritte Sekundärseite S3 auf. An der ersten Primärseite P1 wird die erste Wechselspannung U₁, an der zweiten Primärseite P2 die zweite Wechselspannung U₂ und an der dritten Primärseite P3 die dritte Wechselspannung U₃ bereitgestellt.

Die drei Teiltransformatoren T1, T2 und T3 weisen bevorzugt einen Übertragungsfaktor von 1 auf. Die erste Wechselspannung wird mit dem ersten Teiltransformator T1 gewandelt, sodass an der ersten Sekundärseite eine erste transformierte Wechselspannung U_{T1} anliegt. Die zweite elektrische Spannung U₂ wird mit dem zweiten Teiltransformator T2 so gewandelt, dass an der zweiten Sekundärseite S2 die zweite transformierte Wechselspannung U_{T2} anliegt. Die dritte Wechselspannung U₃ wird mit dem dritten Teiltransformator T3 so transformiert, dass an der dritten Sekundärseite S3 eine dritte transformierte Wechselspannung U_{T3} anliegt.

Die jeweiligen Sekundärseiten S1 beziehungsweise Sekundärspulen der ersten Teiltransformatoren T1 jeder der Umrichtervorrichtungen 2 sind elektrisch in Reihe geschaltet. Zudem sind die zweiten Sekundärseiten S2 der zweiten Teiltransformatoren T2 der jeweiligen Umrichtervorrichtungen 2 elektrisch in Reihe geschaltet. Schließlich sind die dritten Sekundärseiten S3 der dritten Teiltransformatoren T3 der jeweiligen Umrichtervorrichtungen 2 elektrisch in Reihe geschaltet. Die Reihenschaltung der ersten Sekundärseiten S1 ist auf einer ersten Seite mit einem ersten Anschluss A1 und auf einer zweiten Seite mit einem Sternpunkt P elektrisch verbunden. Die Reihenschaltung der zweiten Sekundärseiten S2 ist auf einer ersten Seite mit dem zweiten Anschluss A2 und auf einer zweiten Seite mit dem Sternpunkt P verbunden. Die Reihenschaltung der dritten Sekundärseiten S3 ist auf einer ersten Seite mit dem dritten Anschluss A3 und auf einer zweiten Seite mit dem Sternpunkt P verbunden.

Im Betrieb des Umrichtersystems 1 stellen die jeweiligen Wechselrichtereinrichtungen 4 die drei sinusförmigen elektrischen Wechselspannungen U₁, U₂ und U₃ bereit. Die Wechselspannungen U₁, U₂ und U₃ können beispielsweise eine Effektivspannung von beispielsweise 230 Volt aufweisen. Da die jeweiligen Teiltransformatoren T1, T2 und T3 idealerweise einen Übertragungsfaktor von 1 aufweisen, liegen an den jeweiligen Sekundärseiten S1, S2 und S3 jeweils eine elektrische Wechselspannung mit einem Effektivwert von beispielsweise 230 Volt an. Die jeweils ersten transformierten Wechselspannungen U₁ addieren sich, sodass eine Summenspannung der transformierten ersten Wechselspannungen U_{T1} an dem ersten Anschluss A1 anliegt. An dem zweiten Anschluss A2 liegt eine Summenspannung der zweiten transformierten Wechselspannungen U_{T2} an. Schließlich liegt an dem dritten Anschluss eine Summenspannung der dritten transformierten Wechselspannungen U_{T3} an.

Der erste Anschluss A1 kann mit einer ersten Phase L1 der Mittelspannung, der zweite Anschluss A2 mit einer zweiten Phase L2 der Mittelspannung und der dritte Anschluss A3 mit einer dritten Phase L3 der Mittelspannung verbunden werden. Der Sternpunkt P kann mit einem Neutralleiter N des Mittelspannungsnetzes verbunden werden. An den Anschlüssen A1, A2 und A3 kann ein dreiphasiges Drehstromsystem bereitgestellt werden, das elektrisch mit dem Mittelspannungsnetz verbunden ist.

Dabei kann es auch vorgesehen sein, dass die jeweiligen Wechselspannungen U₁, U₂ und U₃, die mit den jeweiligen Wechselrichtereinrichtungen 4 bereitgestellt werden, jeweils angepasst werden. Beispielsweise können die Wechselspannungen U₁, U₂ und/oder U₃, die mit einer Wechselrichtereinrichtung 4 ausgegeben werden, an die jeweiligen Wechselspannungen U₁, U₂ und/oder U₃ angepasst werden, die mit einer anderen Wechselrichtereinrichtung 4 ausgegeben werden. Zu diesem Zweck kann beispielsweise in jeder der Wechselrichtereinrichtungen 4 eine Messeinheit vorgesehen sein, mit der die Wechselspannungen U₁, U₂ und/oder U₃ der anderen Wechselrichtereinrichtungen 4 gemessen werden kann. Alternativ oder zusätzlich können die jeweiligen Wechselrichtereinrichtungen 4 eine Kommunikationseinrichtung beziehungsweise einen Kommunikationsport umfassen, der mit einem zentralen Steuergerät verbunden ist. Somit kann beispielsweise erreicht werden, dass die jeweiligen Wechselspannungen U₁, U₂ und/oder U₃ derart angepasst werden, dass sich an den jeweiligen Ausgängen A1, A2 und/oder A3 eine jeweils sinusförmige Summenspannung ergibt.

An den jeweiligen Ausgängen A1, A2 und A3 werden die jeweiligen transformierten Wechselspannungen U_{T1}, U_{T2} und U_{T3} aufaddiert. Anhand der Anzahl der Umrichtervorrichtungen 2 und der an den jeweiligen Teiltransformatoren T1, T2 und T3 anliegenden transformierten Wechselspannungen U_{T1}, U_{T2} und U_{T3} kann die jeweilige Mittelspannung angepasst werden.

Somit kann ein modular aufgebautes Umrichtersystem 1 bereitgestellt werden, das beispielsweise einfach transportiert werden kann. Zudem kann zum Bereitstellen der jeweiligen Umrichtervorrichtungen 2 eine einheitliche Massenware verwendet werden, sodass die jeweiligen Umrichtervorrichtungen 2 kostengünstig gefertigt werden können. Wenn eine der Umrichtervorrichtungen 2 ausfällt, können die übrigen Umrichtervorrichtungen 2 derart angesteuert werden, dass die fehlende elektrische Spannung ausgeglichen wird. Darüber hinaus kann eine entsprechende Fehlermeldung über die Kommunikationseinrichtung beziehungsweise das Steuergerät ausgegeben werden. Des Weiteren sind keine Netzfilter notwendig, da die einzelnen Umrichtervorrichtungen 2 eine sinusförmige Ausgangsspannung erzeugen. Dies ermöglicht auch die Verwendung von langen Anschlussleitungen. Durch die Einzelansteuerung der Wechselrichtereinrichtungen 4 kann die Form der Ausgangsspannung beziehungsweise des Stroms beeinflusst werden. Darüber hinaus ist die Verwendung von günstigen Standard-Wechselrichterkomponenten gegeben, die beispielsweise für niedrige Spannungen ausgelegt sein können.

Des Weiteren kann eine Wechselrichtereinrichtung 4, die im Betrieb ausfällt, auf einfache Weise ausgetauscht werden, da diese galvanisch getrennt von der Mittelspannung ist. Dies ermöglicht auch ein einfaches und günstiges Abschalten der Anlage, da die einzelnen Umrichtervorrichtungen 4 einzeln den Energiefluss trennen können. So müssen beispielsweise keine entsprechenden Lasttrenner für das Mittelspannungsnetz verwendet werden. Durch die verhältnismäßig hohen elektrischen Spannungen beziehungsweise Wechselspannungen U₁, U₂ und U₃ auf den jeweiligen Primärseiten P1, P2 und P3 sind die Leistungsverluste sehr gering. Darüber hinaus kann somit auch der Querschnitt der Leitungen der Teiltransformatoren T1, T2 und T3 reduziert werden. Schließlich ist zu erwarten, dass der Wirkungsgrad des Umrichtersystems 1 sehr hoch ist, da kein nachgeschalteter Transformator beziehungsweise entsprechende Filter nötig sind.

## Patentansprüche

1. Umrichtersystem (1) für ein elektrisches Versorgungsnetz mit
- einer ersten und zumindest einer zweiten Umrichtervorrichtung (2), wobei jede der Umrichtervorrichtungen (2)
- eine Spannungsquelle (3) zum Bereitstellen einer elektrischen Spannung (U_{G}),
- eine Wechselrichtereinrichtung (4) zum Bereitstellen einer Wechselspannung (U₁, U₂, U₃) aus der von der Spannungsquelle (3) bereitgestellten elektrischen Spannung (U_{G}) und
- eine Transformatoreinrichtung (5) zum Transformieren der an einer Primärspule anliegenden von dem Wechselrichter (4) bereitgestellten Wechselspannung (U₁, U₂, U₃) in eine an einer Sekundärspule anliegende transformierte Wechselspannung (UT₁, U_{T2}, U_{T3}), umfasst,
- wobei die Sekundärspulen der ersten und der zumindest einen zweiten Umrichtervorrichtung (2) elektrisch in Reihe geschaltet sind,
- und wobei an einem Ausgang (A1, A2, A3) des Umrichtersystems (1) eine durch die Reihenschaltung der Sekundärspulen gebildete Mittelspannung anliegt,
**dadurch gekennzeichnet, dass**
- die Wechselrichtereinrichtung (4) der ersten Umrichtervorrichtung (2) eine Messeinheit zum Messen der mit der Wechselrichtereinrichtung (4) der zumindest einen zweiten Umrichtervorrichtung (2) bereitgestellten Wechselspannung aufweist und
- die Wechselrichtereinrichtung (4) der ersten Umrichtervorrichtung (2) dazu ausgelegt ist, die mit der Wechselrichtereinrichtung (4) der ersten Umrichtervorrichtung (2) bereitgestellte Wechselspannung (U₁, U₂, U₃) derart anzupassen, dass die Mittelspannung einen sinusförmigen Verlauf aufweist und
- mit der Messeinheit der Wechselrichtereinrichtung (4) der ersten Umrichtervorrichtung (2) die Amplitude und/oder die Phase der mit der Wechselrichtereinrichtung (4) der zweiten Umrichtervorrichtung (2) bereitgestellten Wechselspannung (U₁, U₂, U₃) gemessen werden und
- wenn die Signalform der Wechselspannung (U₁, U₂, U₃) von einem sinusförmigen Verlauf abweicht, die mit der Wechselrichtereinrichtung (4) der ersten Umrichtervorrichtung (2) bereitgestellte Wechselspannung (U₁, U₂, U₃) bezüglich der Amplitude und/oder Phase derart angepasst werden, dass eine Summenspannung aus den transformierten Wechselspannungen (UT₁, U_{T2}, U_{T3}) der Umrichtervorrichtungen (2) einen sinusförmigen Verlauf aufweisen.

2. Umrichtersystem (1) nach Anspruch 1, wobei die Wechselrichtereinrichtung (4) der ersten Umrichtervorrichtung (2) dazu ausgelegt ist, eine Amplitude und/oder eine Phase der mit der Wechselrichtereinrichtung (4) der ersten Umrichtervorrichtung (2) bereitgestellten Wechselspannung (U₁, U₂, U₃) in Abhängigkeit von der gemessenen Wechselspannung der Wechselrichtereinrichtung (4) der zumindest einen zweiten Umrichtervorrichtung (2) anzupassen.

3. Umrichtersystem (1) nach einem der vorhergehenden Ansprüche, wobei das Umrichtersystem (1) eine Steuereinrichtung zum Ansteuern der Wechselrichtereinrichtung (4) der ersten und der zumindest einen zweiten Umrichtervorrichtung (2) aufweist.

4. Umrichtersystem (1) nach Anspruch 3, wobei die erste und/oder die zumindest eine zweite Umrichtervorrichtung (2) eine Kommunikationseinrichtung aufweist, die zur Datenkommunikation mit dem Steuergerät verbunden sind.

5. Umrichtersystem (1) nach einem der vorhergehenden Ansprüche, wobei die jeweilige Spannungsquelle (3) der ersten und der zumindest einen zweiten Umrichtervorrichtung (2) dazu ausgelegt ist, eine Gleichspannung als die elektrische Spannung (U_{G}) auszugeben.

6. Umrichtersystem (1) nach einem der vorhergehenden Ansprüche, wobei bei der jeweiligen Transformatoreinrichtung (5) der ersten und der zumindest einen zweiten Umrichtervorrichtung (2) eine Windungszahl der Primärspule einer Windungszahl der Sekundärspule entspricht.

7. Umrichtersystem (1) nach einem der vorhergehenden Ansprüche, wobei die jeweilige Wechselrichtereinrichtung (4) der ersten und der zumindest einen zweiten Umrichtervorrichtung (2) dazu ausgelegt ist, eine erste Wechselspannung (U₁) und zumindest eine zu der ersten Wechselspannung (U₁) phasenverschobene zweite Wechselspannung (U₂) auszugeben.

8. Umrichtersystem (1) nach Anspruch 7, wobei die jeweilige Transformatoreinrichtung (5) der ersten und der zumindest einen zweiten Umrichtervorrichtung (2) zumindest zwei Teiltransformatoren (T1, T2, T3) mit einer jeweiligen Primärseite (P1, P2, P3) und einer jeweiligen Sekundärseite (S1, S2, S3) umfasst, wobei an der Primärseite (P1) eines ersten der zumindest zwei Teiltransformatoren (T1) die erste Wechselspannung (U₁) und an der Primärseite (P2) eines zweiten der zumindest zwei Teiltransformatoren (T2) die zweite Wechselspannung (U₂) anliegt.

9. Umrichtersystem (1) nach Anspruch 8, wobei Sekundärseiten (S1, S2, S3) des ersten Teiltransformatoren (T1) und die Sekundärseiten (S1, S2, S3) der zweiten Teiltransformatoren (T2) der ersten und der zumindest einen zweiten Umrichtervorrichtung (2) jeweils elektrisch in Reihe geschaltet sind.

10. Umrichtersystem (1) nach einem der vorhergehenden Ansprüche, wobei das Umrichtersystem (1) dazu ausgelegt ist, eine an dem Anschluss anliegende Mittelspannung mittels der jeweiligen Transformatoreinrichtung (5) der ersten und der zumindest einen zweiten Umrichtervorrichtung (2) zu transformieren und mittels der jeweiligen Wechselrichtereinrichtung (4) der ersten und der zumindest einen zweiten Umrichtervorrichtung (2) zu wandeln.

## Claims

1. Converter system (1) for an electric supply network, comprising
- a first and at least one second converter apparatus (2), each of the converter apparatuses (2) comprising
- a voltage source (3) for providing an electric voltage (U_{G}),
- an inverter device (4) for providing an AC voltage (U₁, U₂, U₃) from the electric voltage (U_{G}) provided by the voltage source (3), and
- a transformer device (5) for transforming the AC voltage (U₁, U₂, U₃) provided by the inverter (4) and applied to a primary coil into a transformed AC voltage (UT₁, U_{T2}, U_{T3}) which is applied to a secondary coil,
- the secondary coils of the first and the at least one second converter apparatus (2) being electrically connected in series,
- and a medium voltage formed by the series circuit of the secondary coils being applied to an output (A1, A2, A3) of the converter system (1),
**characterized in that**
- the inverter device (4) of the first converter apparatus (2) has a measuring unit for measuring the AC voltage provided using the inverter device (4) of the at least one second converter apparatus (2) and
- the inverter device (4) of the first converter apparatus (2) is designed to adapt the AC voltage (U1, U2, U3) provided using the inverter device (4) of the first converter apparatus (2) in such a manner that the medium voltage has a sinusoidal profile and
- the measuring unit of the inverter device (4) of the first converter apparatus (2) is used to measure the amplitude and/or the phase of the AC voltage (U₁, U₂, U₃) provided using the inverter device (4) of the second converter apparatus (2), and
- if the signal waveform of the AC voltage (U₁, U₂, U₃) deviates from a sinusoidal profile, the amplitude and/or phase of the AC voltage (U₁, U₂, U₃) provided using the inverter device (4) of the first converter apparatus (2) is/are adapted in such a manner that a sum voltage of the transformed AC voltages (U_{T1}, U_{T2}, U_{T3}) from the converter apparatuses (2) has a sinusoidal profile.

2. Converter system (1) according to Claim 1, the inverter device (4) of the first converter apparatus (2) being designed to adapt an amplitude and/or a phase of the AC voltage (U₁, U₂, U₃) provided using the inverter device (4) of the first converter apparatus (2) on the basis of the measured AC voltage from the inverter device (4) of the at least one second converter apparatus (2).

3. Converter system (1) according to one of the preceding claims, the converter system (1) having a control device for controlling the inverter device (4) of the first and the at least one second converter apparatus (2).

4. Converter system (1) according to Claim 3, the first and/or the at least one second converter apparatus (2) having a communication device connected to the control device for the purpose of communicating data.

5. Converter system (1) according to one of the preceding claims, the respective voltage source (3) of the first and the at least one second converter apparatus (2) being designed to output a DC voltage as the electric voltage (U_{G}).

6. Converter system (1) according to one of the preceding claims, a number of turns of the primary coil corresponding to a number of turns of the secondary coil in the respective transformer device (5) of the first and the at least one second converter apparatus (2).

7. Converter system (1) according to one of the preceding claims, the respective inverter device (4) of the first and the at least one second converter apparatus (2) being designed to output a first AC voltage (U₁) and at least one second AC voltage (U₂) which is phase-shifted with respect to the first AC voltage (U₁).

8. Converter system (1) according to Claim 7, the respective transformer device (5) of the first and the at least one second converter apparatus (2) comprising at least two partial transformers (T1, T2, T3) with a respective primary side (P1, P2, P3) and a respective secondary side (S1, S2, S3), the first AC voltage (U₁) being applied to the primary side (P1) of a first of the at least two partial transformers (T1) and the second AC voltage (U₂) being applied to the primary side (P2) of a second of the at least two partial transformers (T2).

9. Converter system (1) according to Claim 8, secondary sides (S1, S2, S3) of the first partial transformers (T1) and the secondary sides (S1, S2, S3) of the second partial transformers (T2) of the first and the at least one second converter apparatus (2) each being electrically connected in series.

10. Converter system (1) according to one of the preceding claims, the converter system (1) being designed to transform a medium voltage applied to the connection by means of the respective transformer device (5) of the first and the at least one second converter apparatus (2) and to convert it by means of the respective inverter device (4) of the first and the at least one second converter apparatus (2).

## Revendications

1. Système convertisseur (1) pour un réseau d'alimentation électrique, comportant :
- un premier et au moins un deuxième dispositif convertisseur (2), chacun des dispositifs convertisseurs (2) comprenant
- une source de tension (3) pour fournir une tension électrique (U_{G}),
- un dispositif onduleur (4) pour fournir une tension alternative (U₁, U₂, U₃) à partir de la tension électrique (U_{G}) fournie par la source de tension (3) et
- un dispositif transformateur (5) pour transformer la tension alternative (U₁, U₂, U₃) fournie par l'onduleur (4) et appliquée à une bobine primaire en une tension alternative transformée (U_{T1}, U_{T2}, U_{T3}) appliquée à une bobine secondaire,
- les bobines secondaires du premier et de l'au moins un deuxième dispositif convertisseur (2) étant montées électriquement en série et
- à une sortie (A₁, A₂, A₃) du système convertisseur (1) étant appliquée une tension moyenne formée par le montage en série des bobines secondaires,
**caractérisé en ce que**
- le dispositif onduleur (4) du premier dispositif convertisseur (2) comporte une unité de mesure pour mesurer la tension alternative fournie par le dispositif onduleur (4) de l'au moins un deuxième dispositif convertisseur (2) et
- le dispositif onduleur (4) du premier dispositif convertisseur (2) est conçu pour adapter la tension alternative (U₁, U₂, U₃) fournie par le dispositif onduleur (4) du premier dispositif convertisseur (2) de manière telle que la tension moyenne présente un tracé sinusoïdal et
- avec l'unité de mesure du dispositif onduleur (4) du premier dispositif convertisseur (2) étant mesurées l'amplitude et/ou la phase de la tension alternative (U₁, U₂, U₃) fournie par le dispositif onduleur (4) du deuxième dispositif convertisseur (2) et,
- si la forme du signal de la tension alternative (U₁, U₂, U₃) diffère d'un tracé sinusoïdal, la tension alternative (U₁, U₂, U₃) fournie par le dispositif onduleur (4) du premier dispositif convertisseur (2) est adaptée de manière telle en amplitude et/ou en phase qu'une tension de somme issue des tensions alternatives transformées (UT₁, U_{T2}, U_{T3}) des dispositifs convertisseurs (2) présente un tracé sinusoïdal.

2. Système convertisseur (1) selon la revendication 1, le dispositif onduleur (4) du premier dispositif convertisseur (2) étant conçu pour adapter une amplitude et/ou une phase de la tension alternative (U₁, U₂, U₃) fournie par le dispositif onduleur (4) du premier dispositif convertisseur (2) en fonction de la tension alternative mesurée du dispositif onduleur (4) de l'au moins un deuxième dispositif convertisseur (2).

3. Système convertisseur (1) selon l'une des revendications précédentes, le système convertisseur (1) comportant un dispositif de commande pour commander le dispositif onduleur (4) du premier et de l'au moins un deuxième dispositif convertisseur (2).

4. Système convertisseur (1) selon la revendication 3, le premier et/ou l'au moins un deuxième dispositif convertisseur (2) comportant un dispositif de communication qui est relié à l'appareil de commande aux fins de la communication de données.

5. Système convertisseur (1) selon l'une des revendications précédentes, la source de tension respective (3) du premier et de l'au moins un deuxième dispositif convertisseur (2) étant conçue pour émettre une tension continue en tant que tension électrique (U_{G}).

6. Système convertisseur (1) selon l'une des revendications précédentes, un nombre d'enroulements de la bobine primaire correspondant, pour chaque dispositif transformateur (5) du premier et de l'au moins un deuxième dispositif convertisseur (2), à un nombre d'enroulements de la bobine secondaire.

7. Système convertisseur (1) selon l'une des revendications précédentes, le dispositif onduleur respectif (4) du premier et de l'au moins un deuxième dispositif convertisseur (2) étant conçu pour émettre une première tension alternative (U₁) et au moins une deuxième tension alternative (U₂) déphasée par rapport à la première tension alternative (U₁).

8. Système convertisseur (1) selon la revendication 7, le dispositif transformateur respectif (5) du premier et de l'au moins un deuxième dispositif convertisseur (2) comprenant au moins deux transformateurs partiels (T1, T2, T3) avec un côté primaire respectif (P1, P2, P3) et un côté secondaire respectif (S1, S2, S3), au côté primaire (P1) d'un premier des au moins deux transformateurs partiels (T1) étant appliquée la première tension alternative (U₁) et au côté primaire (P2) d'un deuxième des au moins deux transformateurs partiels (T2) étant appliquée la deuxième tension alternative (U₂).

9. Système convertisseur (1) selon la revendication 8, des côtés secondaires (S1, S2, S3) du premier transformateur partiel (T1) et les côtés secondaires (S1, S2, S3) des deuxièmes transformateurs partiels (T2) du premier et de l'au moins un deuxième dispositif convertisseur (2) étant respectivement montés électriquement en série.

10. Système convertisseur (1) selon l'une des revendications précédentes, le système convertisseur (1) étant conçu pour transformer une tension moyenne appliquée au raccord au moyen du dispositif transformateur respectif (5) du premier et de l'au moins un deuxième dispositif convertisseur (2) et pour la convertir au moyen du dispositif onduleur respectif (4) du premier et de l'au moins un deuxième dispositif convertisseur (2).
